# EUROPÄISCHE PATENTSCHRIFT

(11) **EP 0 584 762 B1**
(45) Veröffentlichungstag und Bekanntmachung des Hinweises auf die Patenterteilung: **03.06.1998**
(21) Anmeldenummer: 93113430.8
(22) Anmeldetag: 23.08.1993
(51) Int. Cl.: B09B 1/00

(54) **Anlage zur Förderung von Sickerwasser aus Entgasungsbrunnen von Mülldeponien**
Arrangement for removing infiltration water from gas collection wells in refuse dumps
Installation pour l'évacuation des eaux d'infiltration dans les puits de captage de gaz des décharges d'ordures

(30) Priorität: 26.08.1992 DE 4228363
(43) Veröffentlichungstag der Anmeldung: 02.03.1994
(73) Patentinhaber: AUGUST & JEAN HILPERT GmbH & Co., D-90425 Nürnberg (DE)
(72) Erfinder: Hess, Thomas Dr., D-91301 Forchheim (DE); Schaller, Reiner, D 95191 Leupoldsgrün (DE); Sperl, Johann G. Dipl.-Ing., D-81243 München (DE)
(74) Vertreter: Hansmann, Axel, Dipl.-Wirtsch.-Ing.

(56) Entgegenhaltungen:
- WO-A-88/06209
- DE-A- 3 441 158
- DE-A- 3 705 902
- US-A- 4 718 486

## Beschreibung

Die Erfindung betrifft eine kombinierte Entgasungs- und Entwässerungsanlage für Deponiebrunnen gemäß dem Oberbegriff des Anspruches 1.

Eine ähnliche Anlage dieser Art, jedoch nur zur Absaugung von Deponiegas, ist in der DE-OS 3705902 beschrieben. Die bekannte Anlage hat einen Brunnenkopf zur Mülldeponieentgasung mit Mengenregulierung und Absperrung, einer Wasservorlage mit Anschlußstutzen zur Wasserrückführung sowie mit einem Probenentnahmestutzen, wobei der Brunnenkopf auf ein in der Deponie angeordnetes Sondenrohr aufgesetzt werden kann. Der einzelne Brunnenkopf kann während des Betriebes in Bezug auf den Gasdurchfluß reguliert oder abgesperrt werden, ohne die übrige Gasförderung zu stören. Bei erhöhtem Anfall von Sickerwasser in der Deponie soll durch den Brunnenkopf hindurch eine Tauchpumpe abgesenkt werden, um das Sickerwasser abpumpen zu können, ohne dabei die Gasförderung zu stören. Dabei kann der Brunnenkopf eine Flammensperre vor den Gasentnahmestutzen enthalten.

Die Entgasung und Entwässerung von Mülldeponien ist einerseits eine wesentliche Umweltschutznotwendigkeit, wobei jedoch das anfallende Deponiegas auch als Energiequelle nutzbar ist.

Demgemäß werden in Mülldeponien Bohrungen, sog. Brunnen, von beispielsweise 25 m Tiefe niedergebracht, wobei gemäß der oben erläuterten bekannten Anlage der Brunnen nicht nur zur Entgasung, sondern auch zum Abpumpen von anfallenden Sickerwasser oder auch Kondenswasser genutzt werden soll.

In aller Regel werden aufgrund ihrer Zweckbestimmung sowohl die Gasfassung wie auch für die Sickerwasserhebung ein jeweils eigener Brunnen gebaut. Das bedingt jedoch einen unerwünscht hohen Bau- und Kostenaufwand.

Bei der oben erläuterten bekannten Anlage zur Deponieentgasung und -entwässerung mittels eines einzigen Brunnens wiederum wurde die Anordnung einer Flammensperre vor dem Gasentnahmestutzen vorgesehen, die das Eindringen einer Flamme und deren Weiterleitung in anschließende Rohrleitungen und damit einem Gesamtschaden am Rohrsystem bzw. anderen Brunnen vermeiden soll. Die Flammensperre ist dabei auf ein Hauptrohr des Brunnenkopfes aufgesetzt. Abgesehen von den durch eine Flammensperre verursachten zusätzlichen Kosten, besteht ein gewisses Risiko auch in der Beachtung der Montagenotwendigkeit. Das bestehende Risiko ist umso größer, wenn eine möglicherweise funkenerzeugende Tauchpumpe zum Abpumpen von Sickerwasser in den Brunnen abgesenkt werden soll. Dies trifft insbesondere dann zu, wenn die Gasförderung weiterlaufen soll.

Zur Vermeidung einer Explosionsgefahr bei mit Gasbrunnen ausgestatteten Mülldeponien ist aus der DE-OS 3441158 auch die Anwendung einer besonderen Steuerzentrale vorgesehen worden. Dabei sind in jeder Gasabsaugleitung ein Sensor und ein regelbares Absperrorgan angeordnet. Der Sensor meldet den Gehalt an einem charakteristischem Bestandteil des Gasstromes in einer Absaugleitung einer Meß- und Regelvorrichtung, die anhand eines Vergleiches mit vorgegebenen Grenzwerten den Gasvolumenstrom überwacht und bei Über- bzw. Unterschreiten der vorgegebenen Grenzwerte das zugeordnete Absperrorgan etwas mehr schließt bzw. etwas mehr öffnet. Das in der DE-OS 3441158 beschriebene System ist jedoch ausschließlich für die Entgasung von Deponiebrunnen, also nicht für eine kombinierte und gleichzeitig erfolgende Entwässerung und Entgasung derselben vorgesehen.

Aus der DE 37 05 902 A1 ist ein Brunnenkopf zur Mülldeponieentgasung bekannt, welcher ein Hauptrohr aufweist, in das eine Tauchpumpe zum Abpumpen des Sickerwassers abgesenkt werden kann. Da bei Tauchpumpen üblicherweise der Motorteil sowie der eigentliche Pumpenteil baueinheitlich zusammengefaßt sind, besteht insbesondere beim Leerlaufen der Tauchpumpe die Gefahr, daß ihre bewegten Teile innerhalb des Deponiebrunnens eine Funkenbildung verursachen, die zu Explosionen des Deponiegases führen kann.

In der US 4,718,486 wird eine transportable Strahlpumpe beschrieben, welche zum Abpumpen von Flüssigkeiten und/oder Gasen aus Öl- oder Gasbohrlöchern in letztere abgelassen werden kann. Die vorbekannte Strahlpumpe ist mit einem Rückschlagventil versehen, deren Schließkugel ein funkengenerierendes Teil ist, so daß auch bei Verwendung dieser Strahlpumpe innerhalb eines Deponiegasbrunnens eine gewisse Explosionsgefahr gegeben ist. Darüber hinaus muß bei Verwendung der vorbekannten Strahlpumpe die Förderung des Deponiegases unterbrochen und der Brunnenkopf eines Deponiegasbrunnens geöffnet werden, um die Strahlpumpe in den Entgasungsbrunnen absenken und das Sickerwasser vom Brunnengrund abpumpen zu können.

Der vorliegenden Erfindung liegt die Aufgabe zugrunde, bei einer Entgasungs- und Entwässerungsanlage für Deponiebrunnen der eingangs als bekannt vorausgesetzten Art Vorkehrungen zu treffen, um die Gefahr von Gasexplosionen im Bereich des Deponiebrunnens prinzipiell auch dann zu vermeiden, wenn gleichzeitig entgast und entwässert wird. Dabei soll der Bauaufwand für die Explosionssicherheit niedrig gehalten und auch die Notwendigkeit besonderer Flammensperren erübrigt werden.

Ausgehend von einer Entgasungs- und Entwässerungsanlage der eingangs als bekannt vorausgesetzten Gattung ist die Merkmalsvereinigung zur Lösung dieser Aufgabe im Anspruch 1 gekennzeichnet.

Die Erfindung zeichnet sich dadurch aus, daß bei ihr auch bei Betreiben der Entwässerung in gasführender Umgebung bzw. zusammen mit der Entgasung die Gefahr von Gasexplosionen im Bereich des Brunnens, hervorgerufen durch den Betrieb der Sickerwasserförderungseinrichtung oder das Vorhandensein von diesbezüglich notwendigen Anlagenteilen selbst, mit absoluter Sicherheit ausgeschlossen ist, wobei diese Explosionssicherheit wegen des Fehlens von korrosionsgefährdeten Kabeln und dergleichen, auch bei aggressiver Brunnenatmosphäre immer erhalten bleibt und diesbezügliWartungs- oder Erneuerungsarbeiten entfallen können. Das Fehlen irgendwelcher funkenerzeugender Teile der Entgasungs- und Entwässerungsanlage im Deponiebrunnen bei Anordnung des möglicherweise funkengefährdeten Antriebsaggregates für die Entwässerungspumpe außerhalb des Brunnens, entfernt von den gasführenden Teilen bzw. außerhalb von als Ex-Zone definierten Bereichen, läßt ohne Sicherheitsrisiko einen gleichzeitigen Betrieb von Entgasung und Entwässerung zu. Gemäß der bevorzugten Ausführungsform des Anspruches 2 handelt es sich bei der Entwässerungspumpe um eine an sich bekannte Strahlpumpe mit Treibstromleitung und Entwässerungsstromleitung ohne bewegte metallische Teile.

Abgesehen von der vollständigen Explosionssicherheit zeichnet sich eine derartige Pumpe auch durch besondere Langlebigkeit unter korrossionsgefährdeten Bedingungen aus.

Dennoch erfordert die Verbindung der Strahlpumpe mit ihrem entfernt von den gasführenden Teilen der Anlage angeordneten Antriebsaggregat nur die Anordnung der Treibstromleitung und der Entwässerungsstromleitung, die auch ohne funkengenerierende Teile auskommen.

Anspruch 3 kennzeichnet die vorteilhafte Anordnung der Strahlpumpe im Fußbereich des Brunnens mittels starrem Leitungsrohr hängend. Die Strahlpumpe läßt sich auf einfache Weise in dem Deponiebrunnen montieren und sie kann bei Bedarf auch ohne die Notwendigkeit eines Wassersumpfes, wie er für Tauchpumpen erforderlich ist, betrieben werden. Somit kann auch ohne die bei Tauchpumpen üblichen notwendigen Wasservorlagen ein Abpumpen sichergestellt und ein zündfunkengenerierender Pumpentrockenlauf vermieden werden.

Ansprüche 4 und 5 kennzeichnen vorteilhafte Ausgestaltungen, wobei es insbesondere der erwähnte Anlaufspeicher ermöglicht, jederzeit wirksam den Entwässerungsvorgang zu beginnen.

Gemäß Anspruch 6 sind das Entwässerungspumenantriebsaggregat und die Sickerwasseraustragsvorrichtung als verfahrbare Einheit ausgeführt. Diese Einheit kann jeweils in sicherem Abstand von gasführenden Teilen der Anlage aufgestellt und nach Wunsch auch verschiedenen Deponie-Brunnen zugeordnet werden.

Anspruch 7 kennzeichnet eine im Bereich des Entwässerungspumpenantriebsaggregates vorgesehene Gaswarneinrichtung. Diese kann wirksam werden, wenn das abgepumpte Sickerwasser einen zu hohen Gasanteil aufweisen sollte. Die erwähnte Explosionssicherheit im Bereich des Brunnens selbst ist aber aufgrund der im Anspruch 1 gekennzeichneten Merkmalsvereinigung auch unabhängig von einer solchen Gaswarneinrichtung im Bereich des Pumpenantriebsaggregates gegeben.

Dabei ist zum Stande der Technik auf die DE-OS 3441158 zu verweisen, die bereits einen Sensor und ein regelbares Absperrorgan in einer Gasabsaugleitung vorsieht.

Anspruch 8 kennzeichnet eine Steuerungseinrichtung für gleichzeitigen Betrieb von Entwässerungspumpe und Gasabsaugeinrichtung und steuerungstechnische Verknüpfung, mittels deren ein für mehrere Brunnen gemeinsam angeordnetes stationäres Entwässerungspumpenantriebsaggregat selektiv, in Abhängigkeit von konzentrations-, dichte- bzw. strömungsabhängigen Parametern, an einen oder mehrere Brunnen anschaltbar ist.

Anspruch 9 kennzeichnet eine sich in zentraler Lage befindliche Vorrichtung, die aufgrund einer Volumenstromdifferenzmessung von Förderstrom und Treibstrom die Notwendigkeit einer Sickerwasserförderung, bzw. in Abhängigkeit von der Lage der Saugdüse, die Wasserspiegelhöhe im Einzugsbereich des Brunnens angibt. Solange der Massenstrom in der Entwässerungsstromleitung größer dem Massenstrom in der Treibstromleitung ist, ergibt sich eine Notwendigkeit zur Förderung des Deponiewassers. Für den Fall eines gleichgroßen Massenstromdurchsatzes von Entwässerungsstrom und Treibstrom (= Leerlauf der Pumpenanlage) ist ein Bertrieb der Pumpenanlage nicht notwendigerweise gegeben.

Anspruch 10 kennzeichnet eine sich in zentraler Lage befindliche Vorrichtung, die aufgrund einer Volumenstromdifferenz- bzw. Druckdifferenzmessung zwischen Förderwasserstrom und Treibwasserstrom, eine Überwachung von Wasserverlusten entlang der Wasserförderleitungen ermöglicht. Für den Fall eines ermittelten Massendurchsatzes des Entwässerungsstromes ist eine entwässerungsstromseitige Leckage vorhanden. Für den Fall eines ermittelten Massendurchsatzes des Treibstroms größer Null bei gleichzeitigem entwässerungsseitigen Nulldurchsatzes ist eine treibstromseitige Leckage vorhanden.

Anspruch 11 kennzeichnet eine sich in zentraler Lage befindliche Vorrichtung, die mittels eines variablen Druckes des Treibwasserstromes eine variable Förderleistung von Deponiewasser ermöglicht. Diese druckabhängige Fördermengenregelung wird durch handelsübliche Überströmregler oder durch druckzahlabhängigen Betrieb der Treibstrompumpe bewerkstelligt.

Es folgt die Beschreibung eines Ausführungsbeispieles der Erfindung anhand von Zeichnungen:
- Fig. 1: zeigt schematisch eine Entgasungs- und Entwässerungsanlage für Deponiebrunnen mit einem entfernt von dem Deponiebrunnen angeordneten Entwässerungspumpenantriebsaggregat
- Fig. 2: zeigt einen Schnitt durch einen Deponiebrunnen mit dem schematisch angedeuteten Brunnenkopf und dem Anordnungsbereich der Entwässerungspumpe
- Fig. 3: zeigt den Brunnenkopf schematisch in Seitenansicht
- Fig. 4: zeigt den Brunnenkopf schematisch in Draufsicht
- Fig. 5: zeigt eine Seitenansicht der an einer Treibstromleitung und Entwässerungsleitung in dem Brunnen hängenden Entwässerungsstrahlpumpe
- Fig. 6: zeigt schematisch das Innere einer Entwässerungsstrahlpumpe
- Fig. 7: zeigt schematisch ein vereinfachtes Verfahrensfließbild für den Entgasungs- und Entwässerungsbetrieb mehrerer Deponiebrunnen mittels einer einzigen und zentral angeordneten stationären Einheit aus Entwässerungspumpenantriebsaggregat und Sickerwasseraustragvorrichtung

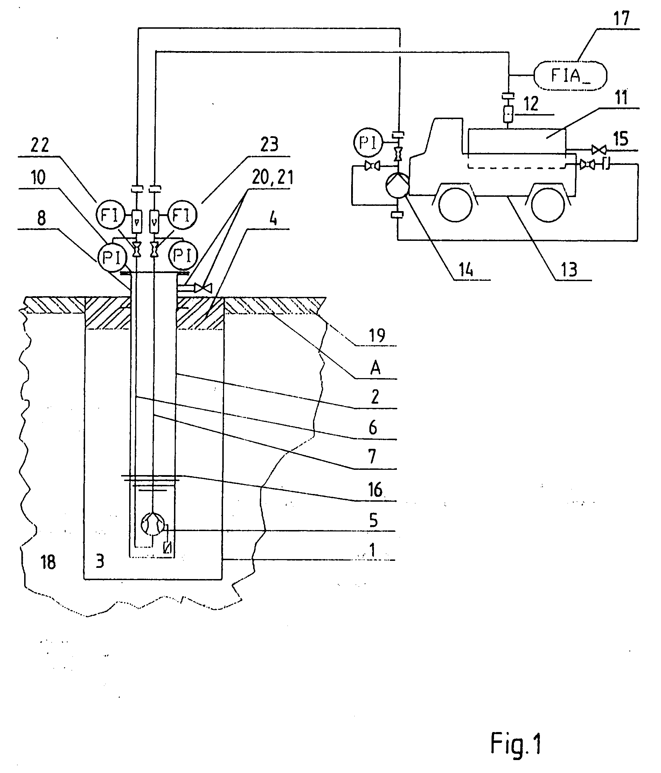

### Erläuterungen zu Fig. 1

Hier sieht man schematisch die Bohrung 1 eines Deponiebrunnes mit einer Deponieabdeckung 19, einem Brunnenfilterrohr 2, einer Brunnenabdichtung 4, einer in dem Brunnen angeordneten Entwässerungspumpe, die als Strahlpumpe 5, ausgeführt ist und dazu dient, in den Deponiebrunnen anfallendes Deponiesickerwasser oder auch Kondenswasser nach oben aus dem Deponiebrunnen herauszuführen. Das geschieht mittels einer Entwässerungsstromleitung 7, durch einen Brunnenkopf 8 mit Brunnenkopfdeckel 10 hindurch zu einer entfernt von dem Deponiebrunnen 1 angeordneten verfahrbaren Einheit 13 mit einem Speicherbehälter 11 und einer Sickerwasseraustragleitung 15.

Man sieht hier schematisch auch den Wasserspiegel 16 und eine Treibstromleitung 6 zum Antrieb für die Strahlpumpe 5 sowie die Treibstrompumpe 14. Vor dem Speicherbehälter 11 sind ein Filter 12 für das auszutragende Deponiewasser und eine Warneinrichtung 17 angeordnet.

Der ebenfalls hier dargestellte Stutzen 20 stellt schematisch die Vorrichtung zur Entnahme des Deponiegases dar, der mittels Absperreinheit 21 geschlossen werden kann.

Oberhalb des gasdicht auf den Brunnenkopf 8 aufgesetzten Brunnenkopfdeckels 10 sind gasdichte Absperreinheiten 22 und 23 für die Treibstromleitung 6 und die Entwässerungsleitung 7 der Strahlpumpe 5 vorgesehen.

Die als Entwässerungspumpe für den Deponiebrunnen dienende Strahlpumpe 5 erhält ihre Antriebsenergie mittels einer an der Einheit 13 vorgesehenen Treibstrompumpe 14 mit regulierbarer Förderleistung, wobei in dem Speicherbehälter 11 immer ein bestimmtes Anlaufvolumen bevorratet bleibt. Von dem Speicherbehälter 11 gelangt das Wasser durch die Treibstromleitung 6 zur Strahlpumpe 5, von welcher der Strom mit dem angesaugten Deponiesickerwasserstrom zum Speicherbehälter 11 zurückfließt.

Der Speicherbehälter kann als Mehrkammerbecken zur Abtrennung von Feststoffen aus dem Deponiesickerwasser ausgeführt sein, so daß das über 15 zu entsorgende Sickerwasser vorgereinigt werden kann.

Die Anlage ist zur Förderung des Deponiesickerwassers und ggf. Kondenswassers bei möglicher ununterbrochener Gasentnahme aus dem Deponiebrunnen ausgelegt. Die in dem gasdicht verschlossenen Deponiebrunnen bzw. Deponieschacht installierte Strahlpumpe 5 und ihre als Antriebsenergieübertragungseinrichtung dienende Treibstromleitung 6 sind frei von funkengenerierenden Teilen, so daß das in dem Brunnen anfallende Gas nicht durch Funken zu Explosionen führen kann. Somit können weitergehende Explosionsschutzmaßnahmen, wie z. B. zusätzliche konstruktive Schutzmaßnahmen (druckstoßfeste Ausführung der gasführenden Rohrteile, Flammensperren bzw. Explosionssicherungen), außer Betracht gelassen werden.

Die zum Antrieb der Strahlpumpe 5 notwendige Treibstrompumpe 14 mit ihrem möglicherweise funkenerzeugenden Antriebsmotor befindet sich in der in sicherer Entfernung getrennt angeordneten verfahrbaren Einheit 13. Dazu ist zu bemerken, daß aufgrund der beschriebenen Anordnung in dem Brunnen nicht nur auf jegliche Elektroinstallation verzichtet werden kann, sondern daß in dem Deponiebrunnen auch keinerlei bewegte metallische Teile vorhanden sind, die durch Beschädigung, Verschleiß oder mechanischen Kontakt zu einer explosions- oder brandverursachenden Funkenentwicklung führen könnte.
Die beschriebene Anlage läßt sich in vielfältiger Weise entsprechend den jeweiligen lokalen Bedürfnissen ausgestalten.

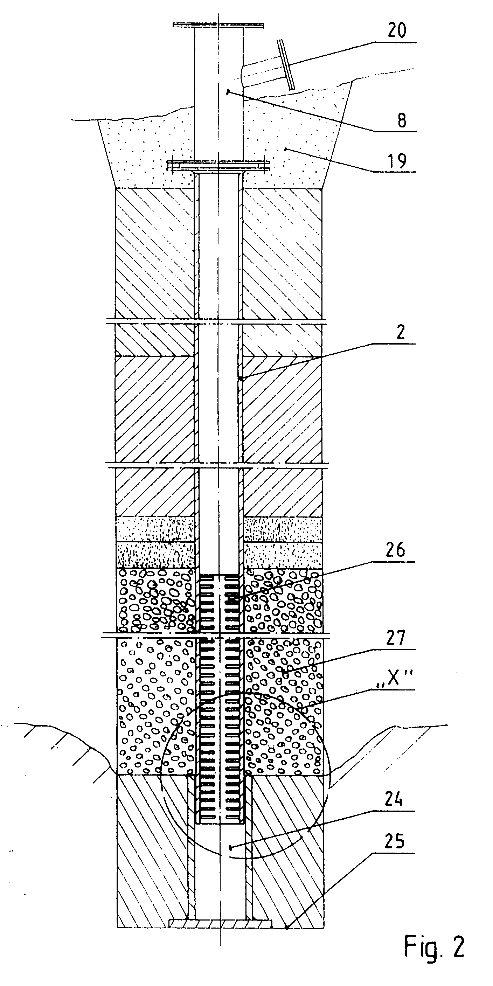

### Erläuterungen zu Fig. 2

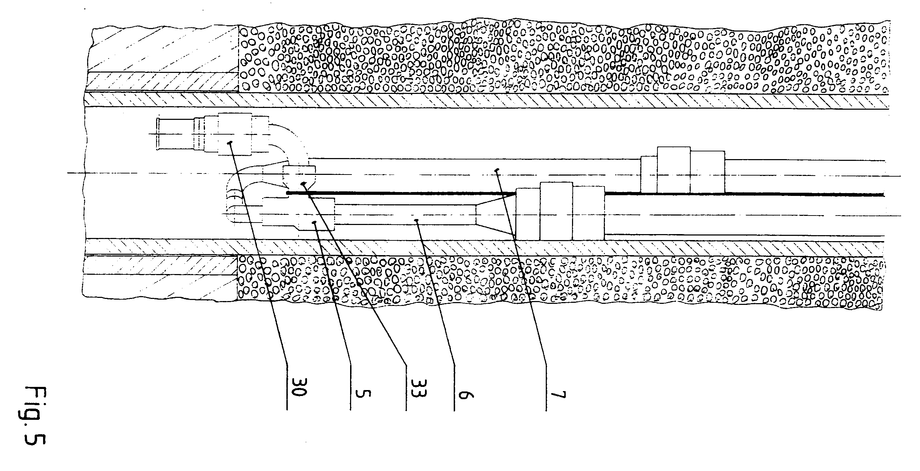

Sie zeigt schematisch den Aufbau des Deponiebrunnens 1 mit dem oberhalb der Deponieabdeckung 19 angeordneten Brunnenkopf 8 mit Gasentnahmestutzen 20. Die Position der Strahlpumpe 5 oberhalb der Brunnensohle 25 ist durch den gestrichelten Kreis "X" angedeutet (s. hierzu Fig. 5). In diesem Bereich befindet sich ein geschlitztes Brunnenrohr 26, welches von einer Schotterschicht 27 umgeben ist. Durch diese Schotterschicht 27 und das Schlitzrohr 26 kann sowohl das in dem umgebenden Müll anfallende Sickerwasser wie auch Deponiegas in die ungeschlitzten Brunnenrohre des Deponiebrunnens gelangen, so daß das Gas durch den Gasentnahmestutzen 20 abgeführt und das Sickerwasser ggf. zusammen mit anfallendem Kondenswasser durch die Strahlpumpe 5 herausgepumpt werden kann.

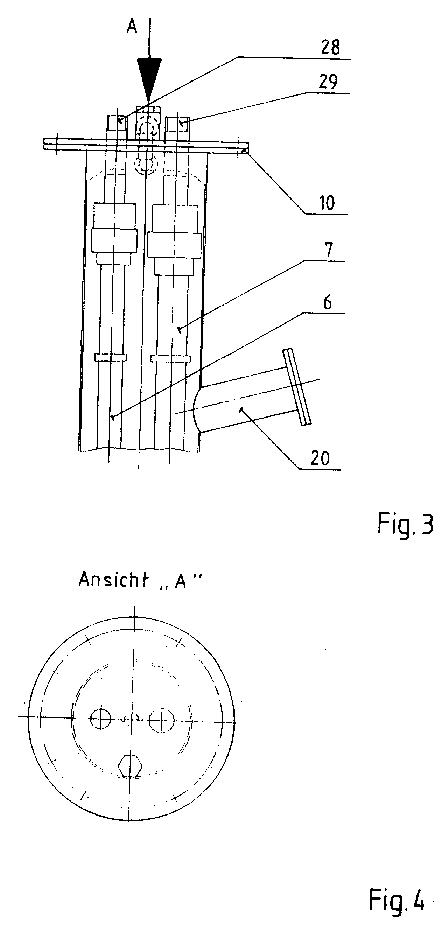

### Erläuterungen zu Fig. 3

Sie zeigt in vergrößertem Maßstab den Brunnenkopf 8 und den Brunnenkopfdeckel 10 mit dem zur Seite herausgeführten Gasentnahmestutzen 20 und den auf dem Brunnenkopfdeckel 10 angeordneten Anschlußstutzen 28 und 29 für die Treibstromleitung 6 und die Entwässerungsstromleitung 7 der Strahlpumpe 5.

### Erläuterungen zu Fig. 4

Sie zeigt die Ansicht A entsprechend der Fig. 3.

### Erläuterungen zu Fig. 5

Sie zeigt ebenfalls die als Entwässerungspumpe dienende Strahlpumpe 5 mit ihrer Treibstromleitung 6 und ihrer Entwässerungsstromleitung 7 sowie ihrer Flüssigkeitsstrahlpumpe 5 mit Ansaugventil 30.

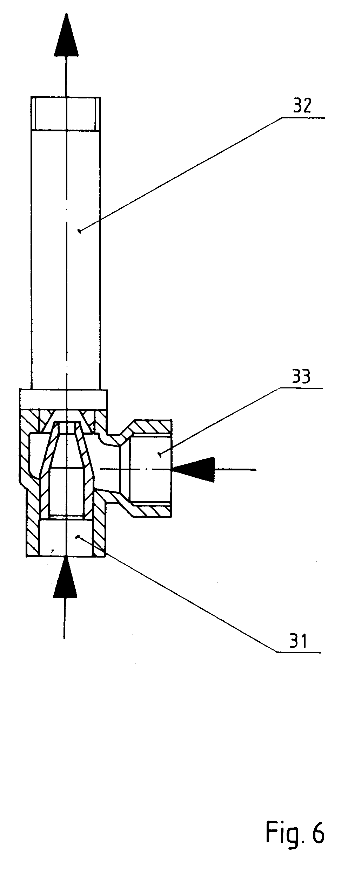

### Erläuterungen zu Fig. 6

Sie zeigt schematisch eine Innenansicht einer bei der vorliegenden Erfindung anwendbaren Strahlpumpe 5 mit einem Anschlußstutzen 31 für eine Treibstromleitung, einem Anschlußstutzen 32 für die Entwässerungsstromleitung und einem Anschlußstutzen 33 für das Ansaugventil 30 für das Deponiewasser.

Die Strahlpumpe arbeitet ohne jegliche bewegte Teile. Derartige Strahlpumpen sind als solche in verschiedenen Ausgestaltungen handelsüblich erhältlich.

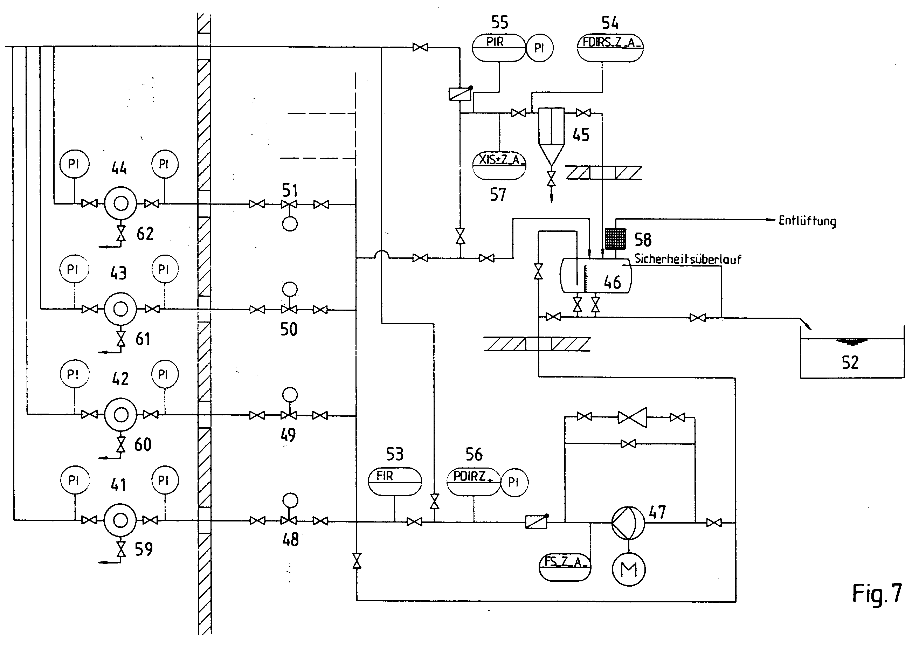

### Erläuterungen zu Fig. 7

Sie zeigt ein vereinfachtes Verfahrensschema für eine zentrale stationäre Sickerwasserhebeanlage gemäß vorgenannten Ansprüchen, die ein zyklisches oder auch frei wählbares Abpumpen mehrerer Brunnen, die je für sich mit einer eigenen Strahlpumpe der beschriebenen Art ausgestattet sind (entspr. Fig. 6), mit einer einzigen Treibstrompumpe 47 (entspr. der Treibstrompumpe 14 aus Fig. 1), die nach Wunsch zyklisch oder selektiv mittels manueller oder automatischer Ansteuerung an die verschiedenen Deponiebrunnen anschaltbar ist.

Auch hier wird in gleicher Weise, wie zuvor beschrieben, eine Anordnung der möglicherweise funkengenerierenden Treibstrompumpe in sicherer Entfernung getrennt von den einzelnen Deponiebrunnen vorgesehen. Hier ist die Treibstrompumpe 47 zweckmäßigerweise in einem stationären Bauwerk untergebracht.

Der Gasentnahmestutzen 20 des Gasbrunnens ist in einer hier nicht näher zu beschreibenden Weise an eine Einrichtung zur Abführung des in dem Deponiebrunnen anfallenden Deponiegases angeschlossen. Dabei kann es sich beispielsweise um eine Gasabsaug- und Verdichterstation handeln, die das anfallende Deponiegas einer wirtschaftlichen Verwertung oder einer Abfackelungsanlage zuführt.
- 1.: Bohrung
- 2.: Brunnenfilterrohre
- 3.: Filterschüttung
- 4.: Brunnendichtung
- 5.: Flüssigkeitsstrahlpumpe
- 6.: Treibstromleitung
- 7.: Entwässerungsstromleitung
- 8.: Brunnenkopf
- 9.: Entgasungsabgang
- 10.: Brunnenkopfdeckel
- 11.: Speicherbehälter/-becken
- 12.: Filter
- 13.: verfahrbare Einheit
- 14.: Treibstrompumpe
- 15.: Sickerwasseraustrageleitung
- 16.: Wasserpegel
- 17.: Warneinrichtung
- 18.: Müll
- 19.: Deponieabdeckung
- 20.: Gasentnahmestutzen
- 21.: Absperreinheit für Gasentnahmeleitung
- 22.: Absperreinheit für Treibstromleitung
- 23.: Absperreinheit für Entwässerungstromleitung
- 24.: Brunnensumpf
- 25.: Brunnensohle
- 26.: Brunnenfilterrohr geschlitzt
- 27.: Schotterschicht
- 28.: Anschlußstutzen für Treibstromleitung
- 29.: Anschlußstutzen für Entwässerungsstromleitung
- 30.: Ansaugventil
- 31.: Anschlußstutzen für Treibstromleitung
- 32.: Anschlußstutzen für Entwässerungsstromleitung
- 33.: Anschlußstutzen für Deponiewasser - Ansaugventil
- 41.: Deponiebrunnen
- 42.: Deponiebrunnen
- 43.: Deponiebrunnen
- 44.: Deponiebrunnen
- 45.: Schmutzfilter
- 46.: Sickerwasser-Pufferbehälter
- 47.: Treibstrompumpe
- 48.: Automatische Absperreinheiten
- 49.: Automatische Absperreinheiten
- 50.: Automatische Absperreinheiten
- 51.: Automatische Absperreinheiten
- 52.: Sickerwassersammelbehälter
- 53.: Mengenmessung
- 54.: Mengenmessung mit Differenzauswertung
- 55.: Druckmessung
- 56.: Druckmessung mit Differenzauswertung
- 57.: Gaswarneinrichtung
- 58.: Flammenrückschlagsicherung
- 59.: Gasabsaugleitung zur Gasabsaugstation
- 60.: Gasabsaugleitung zur Gasabsaugstation
- 61.: Gasabsaugleitung zur Gasabsaugstation
- 62.: Gasabsaugleitung zur Gasabsaugstation

## Patentansprüche

1. Anlage zur gleichzeitigen Förderung von Sickerwasser und Deponiegas aus Entgasungsbrunnen von Mülldeponien mit Brunnenkopf (8), ausgestattet mit einem Gasentnahmeanschuß (20), wobei die Anlage zur Aufnahme einer Entwässerungspumpe (5) im Inneren des Brunnens ausgestaltet ist und der Brunnenkopf (8) einen Entwässerungsanschluß (29) aufweist,
**dadurch gekennzeichnet, daß**
- der Brunnenkopf (8) einen gasdicht auf ihn aufgesetzten Brunnenkopfdeckel (10) aufweist,
- ein Entwässerungspumpen-Antriebsaggregat (14) außerhalb des Brunnens, entfernt von den gasführenden Teilen der Anlage und somit außerhalb von explosionsgefährdeten Bereichen, angeordnet ist,
- die Entwässerung (5) stationär im Brunneninneren und demontierbar angeordnet ist, so daß die Förderung von Sickerwasser bei ununterbrochener Deponiegasentnahme möglich ist, und
- die Entwässerungspumpe (5) und die Antriebsenergie-Übertragungseinrichtungen (6) zwischen Antriebsaggregat (14) und Entwässerungspumpe (5) in den vom Deponiegas berührten Bereichen frei von funkengenerierenden Teilen sind.

2. Anlage nach Anspruch 1,
**dadurch gekennzeichnet, daß**
die Entwässerungspumpe eine an sich bekannte Strahlpumpe (5) ohne bewegte metallische Teile ist, die ihre Antriebsenergie über eine Treibstromleitung (6) von einer entfernt angeordneten Treibstrompumpe (14) erhält und das angesaugte Sickerwasser und ggf. Kondenswasser über eine Entwässerungsstromleitung (7) abführt.

3. Anlage nach Anspruch 1,
**dadurch gekennzeichnet, daß**
die Strahlpumpe (5) im Fußbereich des Brunnens mittels starrem Leitungsrohr hängend angeordnet ist.

4. Anlage nach Anspruch 1, 2 oder 3
**dadurch gekennzeichnet, daß**
der gasdichte Brunnenkopfdeckel (10) des Brunnenkopfes auf der Brunnenaußenseite Absperrvorrichtungen (22, 23) und Anschlußstutzen (28, 29) für die Treibstromleitung (6) und die Entwässerungsstromleitung (7) aufweist.

5. Anlage nach einem oder mehreren der voranstehenden Ansprüche,
**dadurch gekennzeichnet, daß**
im Förderstromkreis ein Anlaufspeicher (11) mit Sickerwasseraustragvorrichtung (15) angeordnet ist.

6. Anlage nach Anspruch 5,
**dadurch gekennzeichnet, daß**
das Entwässerungspumpen-Antriebsaggregat (14) und die Sickerwasseraustragvorrichtung (15) als autarke verfahrbare Einheit (13) ausgeführt sind.

7. Anlage nach einem oder mehreren der voranstehenden Ansprüche,
**dadurch gekennzeichnet, daß**
im Bereich des Entwässerungspumpen-Antriebsaggregates (14) eine Gaswarneinrichtung (57) vorgesehen ist.

8. Anlage nach einem oder mehreren der voranstehenden Ansprüche in Mehrfachanordnung für mehrere Deponiebrunnen,
**dadurch gekennzeichnet, daß**
ein für mehrere Brunnen (41, 42, 43, 44) gemeinsam angeordnetes Entwässerungspumpen-Antriebsaggregat (47) vorgesehen ist, welches mittels steuerungstechnischer Verknüpfung von zentraler Stelle aus selektiv an einen oder mehrere Brunnen (41, 42, 43, 44) anschaltbar ist.

9. Anlage nach einem oder mehreren der voranstehenden Ansprüche in Mehrfachanordnung für mehrere Deponiebrunnen,
**dadurch gekennzeichnet, daß**
eine indirekte und zentrale Wasserspiegelüberwachung jedes einzelnen Deponiebrunnens (41, 42, 43, 44) mittels Volumenstromdifferenzmessung zwischen Förderstrom- und Treibstromleitung vorgesehen ist.

10. Anlage nach einem oder mehreren der voranstehenden Ansprüche in Mehrfachanordnung für mehrere Deponiebrunnen,
**dadurch gekennzeichnet, daß**
eine Leckage- Überwachungsvorrichtung des Sickerwasserfördersystems mittels Volumenstromdifferenz- und Druckdifferenzmessung zwischen Förderstrom- und Treibstromleitung vorgesehen ist.

11. Anlage nach einem oder mehreren der voranstehenden Ansprüche in Mehrfachanordnung für mehrere Deponiebrunnen,
**dadurch gekennzeichnet, daß**
eine zentrale Vorrichtung zur stufenlosen Regulierung der Fördermenge vorgesehen ist.

## Claims

1. Plant for the simultaneous conveyance of percolating water and refuse tip gas out of degassing wells of refuse tips with wellhead (8), equipped with a gas extraction connection (20), the plant being designed for receiving a drainage pump (5) inside the well, and the wellhead (8) having a drainage connection (29),
characterized in that
- the wellhead (8) has a wellhead cover (10) placed onto the latter in a gas-tight manner,
- a drainage-pump drive assembly (14) is arranged outside the well at a distance from the gas-carrying parts of the plant and therefore outside potentially explosive regions,
- the drainage pump (5) is arranged demountably inside the well in a stationary manner, so that it is possible for percolating water to be conveyed while the extraction of refuse tip gas takes place uninterruptedly, and
- the drainage pump (5) and the drive-energy transmission devices (6) between the drive assembly (14) and the drainage pump (5) are free of spark-generating parts in the regions affected by the refuse tip gas.

2. Plant according to Claim 1,
characterized in that
the drainage pump is a jet pump (5) known per se, without any moved metal parts, which receives its drive energy via a propulsive-stream conduit (6) from a propulsive-stream pump (14) arranged at a distance and which discharges sucked-in percolating water and, where appropriate, condensation water via a drainage-stream conduit (7).

3. Plant according to Claim 1,
characterized in that
the jet pump (5) is arranged so as to be suspended in the foot region of the well by means of a rigid conduit pipe.

4. Plant according to Claim 1, 2 or 3,
characterized in that
the gas-tight wellhead cover (10) of the wellhead has, outside the well, shut-off devices (22, 23) and connection pieces (28, 29) for the propulsive-stream conduit (6) and for the drainage-stream conduit (7).

5. Plant according to one or more of the preceding claims,
characterized in that
a start-up reservoir (11) with a percolating-water discharge device (15) is arranged in the conveying circuit.

6. Plant according to Claim 5,
characterized in that
the drainage-pump drive assembly (14) and the percolating-water discharge device (15) are designed as a self-sufficient mobile unit (13).

7. Plant according to one or more of the preceding claims,
characterized in that
a gas warning device (57) is provided in the region of the drainage-pump drive assembly (14).

8. Plant according to one or more of the preceding claims in a multiple arrangement for a plurality of refuse tip wells,
characterized in that
there is provided a drainage-pump drive assembly (47) which is arranged jointly for a plurality of wells (41, 42, 43, 44) and which can be connected selectively to one or more wells (41, 42, 43, 44) from a central point by means of a control link.

9. Plant according to one or more of the preceding claims in a multiple arrangement for a plurality of refuse tip wells,
characterized in that
indirect and central water-level monitoring of each individual refuse tip well (41, 42, 43, 44) by measuring the difference in volumetric flow between the conveying-stream conduit and propulsive-stream conduit is provided.

10. Plant according to one or more of the preceding claims in a multiple arrangement for a plurality of refuse tip wells,
characterized in that
a leakage monitoring device for the percolating-water conveying system by measuring the difference in volumetric flow and difference in pressure between the conveying-stream conduit and propulsive-stream conduit is provided.

11. Plant according to one or more of the preceding claims in a multiple arrangement for a plurality of refuse tip wells,
characterized in that
a central device for the continuous regulation of the conveyed quantity is provided.

## Revendications

1. Installation pour l'extraction simultanée d'eaux d'infiltration et de gaz de décharge, à partir de puits de dégazage de décharges d'ordures dotés d'une tête de puits (8), équipée d'un raccord de prélèvement de gaz (20), l'installation étant équipée pour recevoir une pompe d'épuisement (5) à l'intérieur du puits et la tête de puits (8) présentant un raccord d'évacuation d'eau (29), caractérisée en ce que
- la tête de puits (8) présente un couvercle de tête de puits (10) appliqué sur elle de façon étanche aux gaz,
- un groupe moteur de pompe d'épuisement (14) est disposé à l'extérieur du puits, à distance des parties de l'installation qui conduisent du gaz et ainsi en dehors des zones exposées à un risque d'explosion,
- la pompe d'épuisement (5) est montée en position fixe à l'intérieur du puits et est démontable, de manière que l'extraction des eaux d'infiltration soit possible avec prélèvement sans interruption du gaz de décharge, et
- la pompe d'épuisement (5) et les dispositifs de transmission d'énergie motrice (6), prévus entre le groupe moteur (14) et la pompe d'épuisement (5), ne comportent pas d'éléments générant des étincelles dans les parties touchées par le gaz de décharge.

2. Installation selon la revendication 1, caractérisée en ce que la pompe d'épuisement est une pompe à jet (5), connue en soi, sans éléments métalliques en mouvement, qui reçoit son énergie motrice par l'intermédiaire d'une conduite de fluide moteur (6), d'une pompe à fluide moteur (14) disposée à distance, et les eaux d'infiltration aspirées et, le cas échéant, l'eau de condensation étant évacuées par l'intermédiaire d'une conduite d'écoulement d'évacuation (7) pour l'évacuation des eaux.

3. Installation selon la revendication 1, caractérisée en ce que la pompe à jet (5) est disposée dans la partie de pied du puits, suspendue au moyen d'un tuyau rigide.

4. Installation selon la revendication 1, 2 ou 3, caractérisée en ce que le couvercle de tête de puits (10), étanche aux gaz, de la tête de puits présente, du côté extérieur du puits, des dispositifs d'isolement (22, 23) et des tubulures de raccordement (28, 29) pour la conduite de fluide moteur (6) et la conduite d'écoulement (7) pour l'évacuation des eaux.

5. Installation selon l'une ou plusieurs des revendications précédentes, caractérisée en ce qu'un accumulateur de démarrage (11), équipé d'un dispositif de décharge (15) des eaux d'infiltration, est disposé dans le circuit d'extraction.

6. Installation selon la revendication 5, caractérisée en ce que le groupe moteur de pompe d'épuisement (14) et le dispositif de décharge (15) des eaux d'infiltration sont réalisés sous forme d'une unité (13) déplaçable de façon autarcique.

7. Installation selon l'une ou plusieurs des revendications précédentes, caractérisée en ce qu'un dispositif d'avertissement de présence de gaz (5) est prévu au voisinage du groupe moteur de pompe d'épuisement (14).

8. Installation selon l'une ou plusieurs des revendications précédentes, en agencement multiple pour plusieurs puits de décharge,
caractérisée en ce que
pour plusieurs puits (41, 42, 43, 44) il est prévu un groupe moteur de pompes d'épuisement (47) commun, qui peut être commuté de façon sélective, depuis un poste central, sur un ou plusieurs puits (41, 42, 43, 44), par une combinaison faisant appel à une technique de régulation.

9. Installation selon l'une ou plusieurs des revendications précédentes, en agencement multiple pour plusieurs puits de décharge, caractérisée en ce qu'il est prévu une surveillance indirecte et centrale du niveau d'eau de chaque puits de décharge (41, 42, 43, 44) individuel, réalisée au moyen d'une mesure de la différence de volume entre la conduite d'écoulement pour l'extraction et la conduite de fluide moteur.

10. Installation selon l'une ou plusieurs des revendications précédentes, en agencement multiple pour plusieurs puits de décharge, caractérisée en ce qu'est prévu un dispositif de surveillance de fuite du système d'extraction des eaux d'infiltration, au moyen d'une mesure de la différence de volume et d'une mesure de la différence de pression entre la conduite d'écoulement pour l'extraction et la conduite de fluide moteur.

11. Installation selon l'une ou plusieurs des revendications précédentes, en agencement multiple pour plusieurs puits de décharge, caractérisée en ce qu'un dispositif central de régulation continue progressive du débit transporté est prévu.
